# EUROPÄISCHE PATENTSCHRIFT

(11) **EP 0 759 322 B1**
(45) Veröffentlichungstag und Bekanntmachung des Hinweises auf die Patenterteilung: **11.11.1998**
(21) Anmeldenummer: 95810511.6
(22) Anmeldetag: 14.08.1995
(51) Int. Cl.: B01F 13/10, B01F 3/12

(54) **Verfahren zum Auflösen von knollenförmigen Feststoffen in Flüssigkeiten und Anlage zur Durchführung des Verfahrens**
Method and installation for dissolving solid materials of a bulbous form in a liquid
Procédé et installation de dissolution de matériaux solides en forme de bulbe dans un liquide

(43) Veröffentlichungstag der Anmeldung: 26.02.1997
(73) Patentinhaber: ING. A. MAURER SA, CH-3000 Bern 11 (CH)
(72) Erfinder: Trumpf, Rudolf, CH-3013 Bern (CH); Zehnder, Rolf, CH-4058 Basel (CH)
(74) Vertreter: BOVARD AG - Patentanwälte

(56) Entgegenhaltungen:
- CH-A- 367 378
- FR-A- 319 771
- GB-A- 686 234
- GB-A- 812 292
- GB-A- 891 334
- US-A- 3 593 928
- US-A- 3 836 336

## Beschreibung

Die vorliegende Erfindung bezieht sich auf ein Verfahren zum Auflösen von krümeligen Feststoffen in Flüssigkeiten, die zu knollenförmigen Feststoffen agglomerieren, gemäss dem Oberbegriff des Patentanspruches 1, sowie auf eine Anlage zur Durchführung dieses Verfahrens.

Derartige Verfahren werden allgemein in der Chemie, der Farbstoff-, Lebensmittel-, Pharma- und Kosmetikindustrie eingesetzt und benötigt. Insbesondere geeignet ist dieses Verfahren auch für das schonende Auflösen von derivatisierter Zellulose, welche ein Glukosepolymer darstellt und einen Polymerisationsgrad von etwa 400 hat.

Eine Derivatisierungsmöglichkeit von Zellulose ist ihre Xanthogenierung, das heisst ihre Reaktion mit Natronlauge und CS₂ zu Natriumzellulose-Xanthogenat. Die Xanthogenatmischung besteht aus Natriumzellulose-Xanthogenat und Natronlauge, wobei das Natriumzellulose-Xanthogenat anfänglich in Form von Feststoffpartikeln als breites Spektrum verschieden grosser Knollen in diesem Gemisch vorhanden ist.

Mit den bekannten Verfahren können diese Knollen gelöst und zu einer homogenen Lösung verarbeitet werden.

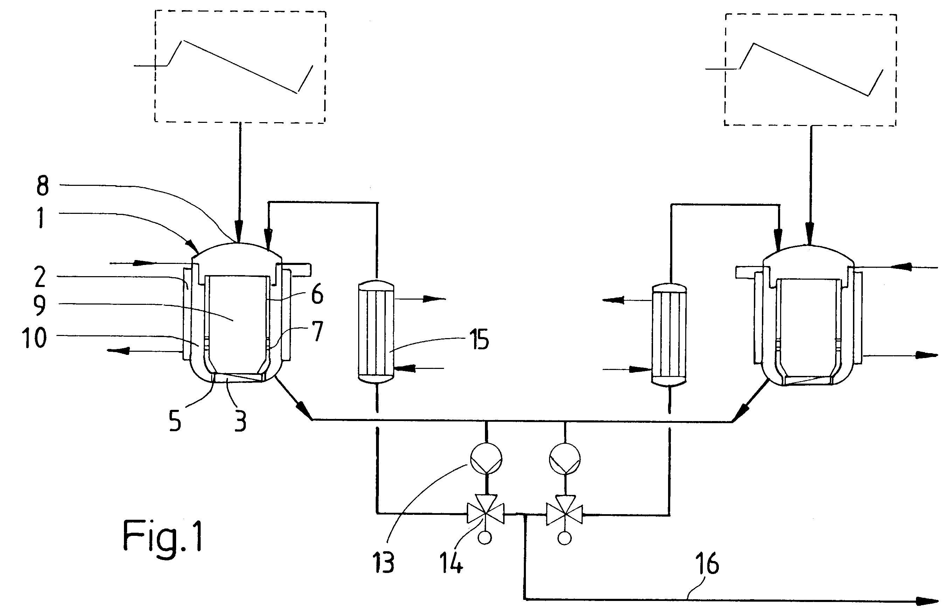

Zum Lösen der Viskose sind vorallem einstufige Löseverfahren und Anlagen zur Durchführung dieses Verfahrens bekannt. In der beiliegenden Fig. 1 ist in schematischer Weise eine bekannte Anlage dargestellt, mit welcher das entsprechende einstufige Löseverfahren durchgeführt werden kann. Diese Anlage besteht aus einem zylindrischen Gefäss 1, das mit einem Kühlmantel versehen ist. Im Bodenbereich des zylindrischen Gefässes 1 ist ein Schaufelrad 3 angeordnet, dass über einen nicht dargestellten Antriebsmotor rotierend angetrieben wird, und welches von einem ringförmigen Sieb 5 umgeben ist. Oberhalb des Siebes 5 ist ein als Doppelmantel ausgebildeter gekühlter Einsatz 6 mit Querrohren 7 angeordnet. Die chargenweise Beladung des zylindrischen Gefässes 1 erfolgt von oben durch den Anschluss 8, wobei das zu lösende Gemisch in bekannter Weise aus einer Xanthogenierungsanlage erfolgt. Hierbei wird der Innenraum des Einsatzes 9 aufgefüllt. Die interne Umwälzung des Gemisches erfolgt durch das Schaufelrad 3, welches das Gemisch vom Innenraum ansaugt, durch das Sieb 5 in den Aussenraum fördert, von wo das Medium durch die Querrohre 7 und über die Krone des gekühlten Einsatzes 6 in den Innenraum zurückfliessen kann. Die Entnahme der Lösung erfolgt aus dem ringförmigen Aussenraum 10.

Im zylindrischen Gefäss 1 ist eine Einrichtung zum Absaugen der Lösungsmitteldämpfe vorgesehen. Diese abgesaugten Lösungsmitteldämpfe werden ins Abluftsystem gegeben und müssen hier rückgewonnen werden, wozu aufwendige Einrichtungen erforderlich sind.

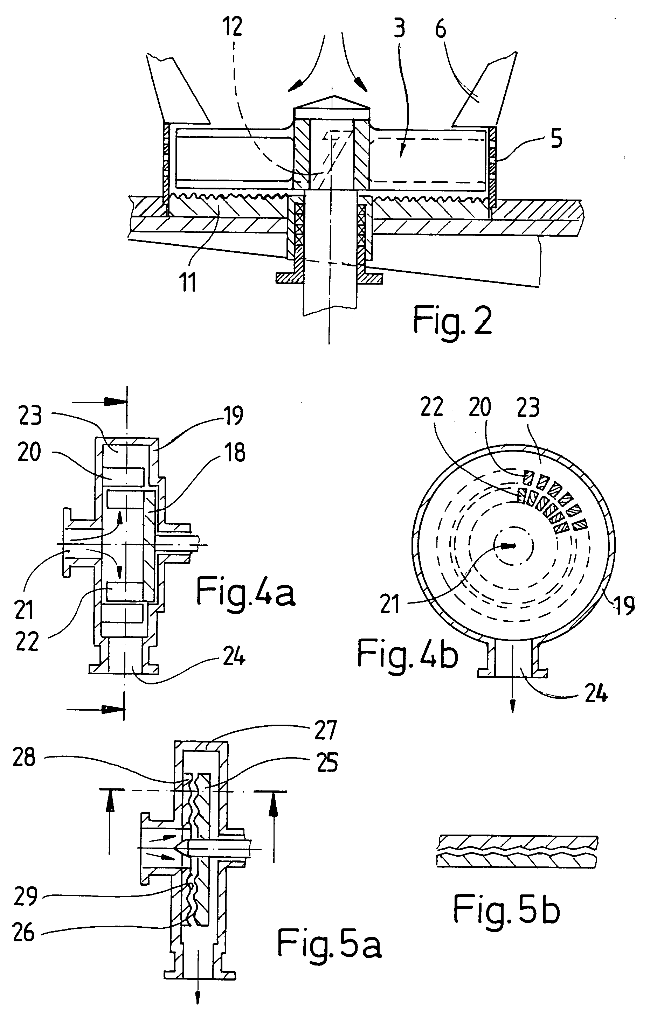

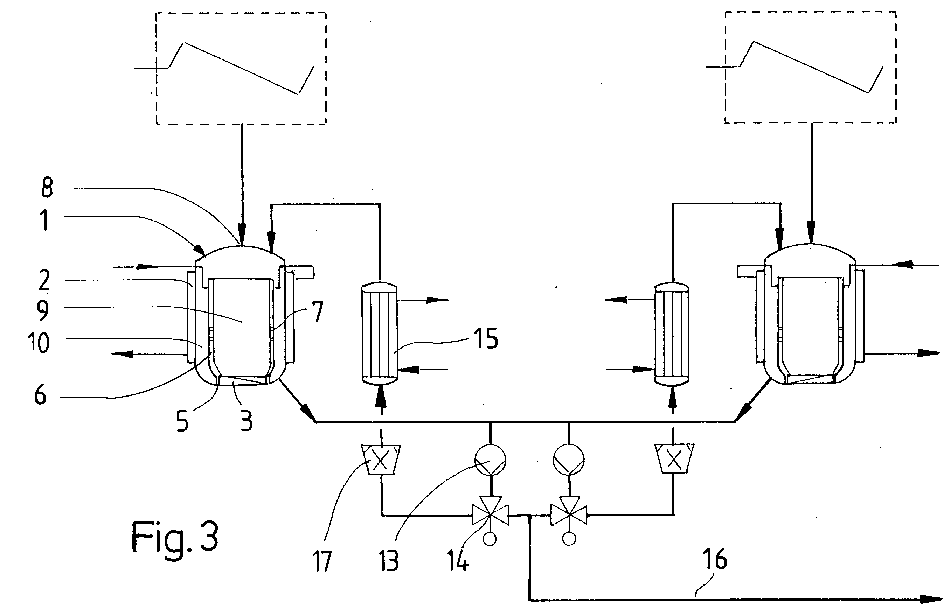

Fig. 2 zeigt eine Schnittdarstellung des unteren Bereiches des zylindrischen Gefässes 1 gemäss Fig. 1, woraus ersichtlich ist, dass die zu lösenden Knollen zwischen dem geriffelten Boden 11 und den geneigten Rotorschaufeln 12 des Schaufelrades 3 sowie zwischen dem Schaufelrad 3 und dem Sieb 5 zerrieben werden. Um Verstopfungen des Siebes 5 zu vermeiden, ist eine relativ grobe Perforation des Siebes 5 erforderlich. Das Gemisch wird solange umgewälzt, bis die gewünschte Homogenität erreicht wird, wonach es über die Pumpe 13 abgepumpt, durch das Ventil 14 und die Leitung zur Weiterverarbeitung abgeleitet werden kann, wie aus Fig. 1 ersichtlich ist.

Zur Vergrösserung der Produktivität und insbesondere um grössere Unterbrüche der produzierten Lösungsmenge zu vermeiden, können zwei entsprechende Anlagen parallel geschaltet werden, wie ebenfalls aus Fig. 1 ersichtlich ist.

Des weiteren kann vorgesehen sein, dass die aus dem ringförmigen Aussenraum 10 entnommene Lösung über einen Kühler 15 in den Behälter 1 zurückgeführt werden kann. Dies ist insbesondere dann erforderlich, wenn, bedingt durch die hohe Viskosität des Anteils an gelöstem Xanthogenat sich bei der Umwälzung eine ausgesprochene Laminarströmung ergibt, welche bekannterweise niedrige Wärmeübertragungseffekte zur Folge hat und demzufolge die Kühlleistung im Behälter zu gering ist.

Ein Problem des einstufigen Verfahrens besteht darin, dass der Lösungsmotor kurzfristig enorme Spitzen bei der Stromaufnahme aufweist. Dies bedingt einerseits entsprechende grosse Installationen für die Energieversorgung und andererseits eine übermässige Belastung des Stromnetzes.

Es sind auch mehrstufige Verfahren bekannt. Eine Anlage zur Durchführung eines derartigen mehrstufigen Verfahrens ist beispielsweise in Fig. 3 dargestellt. Diese Anlage ist im wesentlichen identisch aufgebaut, wie diejenige in Fig. 1, wobei in die Rückführleitung ein zusätzlicher Zerreiber 17 eingesetzt ist.

Bekannte Zerreiber sind in den Fig. 4a, 4b und 5a, 5b dargestellt. Der Zerreiber gemäss Fig. 4 weist ein Schaufelrad 18 auf, das in einem Gehäuse 19 rotiert. Um das Schaufelrad 18 sind Statorschaufeln 20 angeordnet. Die Lösung mit den zu zerkleinernden Knollen wird über die Zuleitung 21 zugeführt, gelangt zwischen den Rotorschaufeln 22 des Laufrades 18 durch die Statorschaufeln 20 in den Aussenraum 23 und wird über die Ableitung 24 weggeführt.

In ähnlicher Weise funktioniert der Zerreiber gemäss Fig. 5, wobei dessen Laufrad 25 scheibenförmig ausgebildet ist mit einer geriffelten Oberfläche 26. Diese Oberfläche 26 wirkt mit einer entsprechend auf dem Gehäuse 27 angebrachten Scheibe 28 mit ebenfalls geriffelter Oberfläche 29 zusammen.

Diese beiden Zerreiber haben den Nachteil, dass die Spaltbreite fest eingestellt ist und somit keine Anpassung an die Knollengrösse möglich ist. Des weiteren haben diese Zerreiber keine Pumpwirkung und müssen demzufolge frei auslaufen können. Die Gehäuse sind strömungstechnisch nicht ideal ausgelegt, so dass Strömungsstockungen auftreten können.

Nachteilig bei diesen bekannten Verfahren ist insbesondere, dass grosse Knollen, die sich im Gemisch befinden können, nicht oder nur schwer verarbeitet werden können. Hierbei muss die Siebperforation des Siebes 5 entsprechend grob gewählt werden, wodurch die Umwälzung im Behälter 1 und die Rezirkulation durch Zerreiber 17 und/oder Kühler 15 mehrmals wiederholt werden muss. Der Energiebedarf hierzu ist gross, wobei die Lösung stark erwärmt und entsprechend gekühlt werden muss. Dies birgt die Gefahr in sich, das im bereits gelösten Xanthogenat der Reifeprozess und somit die Formierung von Gelees oder frühzeitige Koagolation ausgelöst werden kann.

Die in der US-A-3 836 336 dargestellte Einrichtung weist drei hintereinander angeordnete und miteinander verbundene Knetvorrichtungen auf, in welchen die knollenförmigen Feststoffe durch Kneten zerkleinert werden. Dadurch entsteht viel Reibungswärme, was örtliche Überhitzungen zur Folge haben kann. Somit treten auch hier die obengenannten Nachteile von grossem Energiebedarf und entsprechender Kühlung auf.

Die Viskose, die mit derartigen Verfahren erhalten wird, sollte den "richtigen" Reifegrad haben. Dies ist jedoch schwierig zu erreichen, insbesondere wegen den unterschiedlichen Strömungswiderständen, wodurch die Aufenthaltsdauer der zu verarbeitenden Substanz in den Anlagen ebenfalls unterschiedlich ist, so dass bereits eine Koagulation stattfinden kann, die aber nicht erwünscht ist.

Ein weiteres grosses Problem entsteht dadurch, weil die Viskose einerseits Koagulatsanteile enthält, andererseits aber nicht alle Xanthogenatspartikel aufgelöst sind, dass diese beiden Anteile durch nachfolgende Filtrieranlagen ausfiltriert werden müssen, diese Stoffe für das Herstellungsverfahren also verloren sind. Diese Anteile müssen zudem noch entsorgt werden.

Bei Betriebsunterbrüchen, welche verschiedene Gründe haben können, besteht das Problem, dass bei den bekannten Verfahren und Anlagen die Viskose koagoliert. Dies hat zur Folge, dass die entsprechende Anlage nach jedem Betriebsunterbruch ausgeräumt werden muss. Nebst dem Verlust der eingesetzten Materialien, welche erst auch noch entsorgt werden müssen, hat dies auch aufwendige Reinigungsarbeiten zur Folge.

Um eine gute Produktionsqualität zu erreichen, müssen die Anlagen optimal einreguliert sein, was eine gewisse Anfahrzeit zur Folge hat. Die während dieser Anfahrzeit hergestellten Produkte weisen eine ungenügende Qualität auf und müssen entsorgt werden.

Eine erste Aufgabe der vorliegenden Erfindung besteht darin, ein Verfahren zu schaffen, mit welchem die vorgenannten Nachteile vermieden werden und welches ermöglicht, ein Gemisch aus knollenförmigen Feststoffen und einer Flüssigkeit in schonender Art und Weise zu einer homogenen Flüssigkeit zu verarbeiten, wobei insbesondere der Energieverbrauch gesenkt wird, die Produktausbeute höher wird und während kurzer Betriebsunterbrüche keine Koagolation stattfindet.

Erfindungsgemäss erfolgt die Lösung dieser Aufgabe durch die Merkmale der Verfahrensansprüche 1 bis 3.

Eine weitere Aufgabe der Erfindung besteht darin, eine Anlage zur Durchführung des Verfahrens zu schaffen, die insbesondere eine optimale Einregulierung zulässt und bei welcher die Anfahrzeit kurz ist.

Diese wird erfindungsgemäss durch die Merkmale des Anspruches 4 gelöst, wobei sich vorteilhatte Ausgestaltungen der Erfindung aus den weiteren abhängigen Ansprüche ergeben.

Durch die kompakte Bauweise der Anlage und der Vermeidung von schlecht durchströmten Räumen in der Anlage wird erreicht, dass die Aufenthaltsdauer der Substanz in der Anlage im wesentlichen gleichbleibend ist. Dadurch ist der erreichbare Reifegrad der Viskose während der gesamten Produktionsphase im wesentlichen einheitlich.

Infolge des geschlossenen Systems verbleibt der zugeführte Schwefelkohlenstoff in der Substanz. Dies ermöglicht eine Nachreaktion der Xanthogenierung, währenddem die Substanz die Anlage durchläuft. Dadurch ergibt sich eine Qualitätsverbesserung der Viskose.

Da die Koagulation bei einer Temperatur unter 20° C relativ klein ist bei der erfindungsgemässen Anlage die Kühlung wegen der noch tiefen Viskosität der Substanz effizient ist, was den Energiebedarf senkt, muss bei einem Betriebsunterbruch (bis etwa 12 Stunden) die Anlage nicht entleert und gereinigt werden.

Das erfindungsgemässe Verfahren und eine Anlage zur Durchführung dieses Verfahrens wird nachfolgend anhand der beiliegenden Zeichnung beispielhaft näher erläutert.

Es zeigt:
Fig. 6 in schematischer Darstellung den Aufbau einer Anlage zur Durchführung des erfindungsgemässen Verfahrens;
Fig. 7 eine Schnittdarstellung der ersten Einrichtung zur mechanischen Zerkleinerung der in der Flüssigkeit enthaltenen Feststoffpartikel;
Fig. 8 eine Schnittdarstellung entlang Linie VIII-VIII der Einrichtung gemäss Fig. 7;
Fig. 9 eine Schnittdarstellung einer ersten Ausführungsform eines Tanks;
Fig. 10 eine Schnittdarstellung einer zweiten Ausführungsform eines Tanks;
Fig. 11 eine Schnittdarstellung durch eine zweite bzw. dritte Einrichtung zur Zerkleinerung der in der Flüssigkeit enthaltenen Feststoffpartikel;
Fig. 12 eine Ansicht auf die Rotorschaufeln (Fig. 12 unten) und auf die Statorschaufeln (Fig. 12 oben), aufgenommen entlang Linie XII-XII durch die Einrichtung gemäss Fig. 11;
Fig. 13 in vergrösserter Darstellung das Zusammenwirken der Rotorschaufeln und der Statorschaufeln der Einrichtung gemäss Fig. 11.

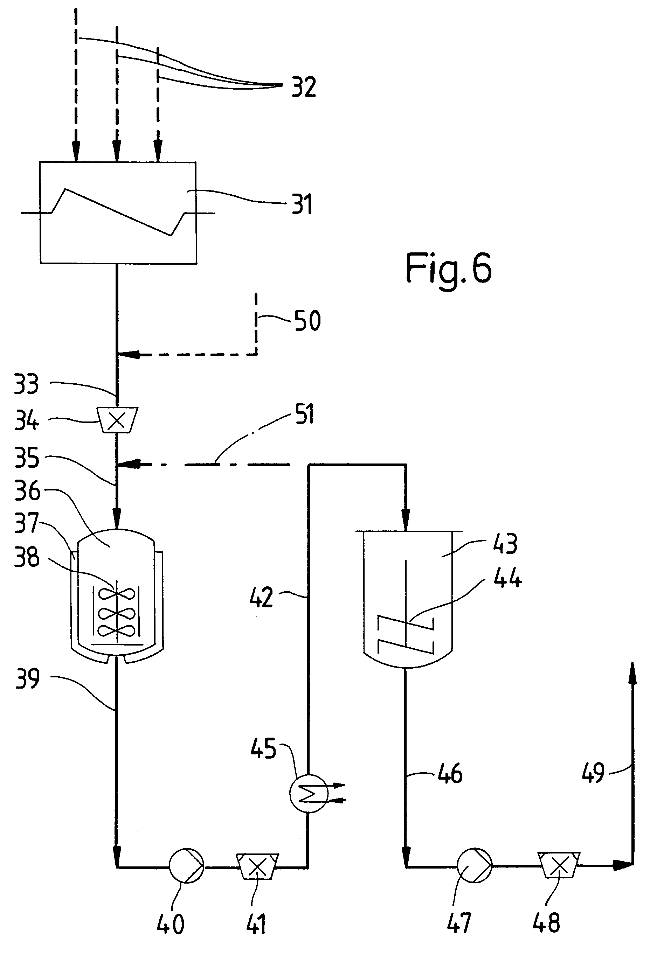

Wie aus Fig. 6 ersichtlich ist, wird zur Herstellung einer Viskoselösung in eine Xanthogenierungseinrichtung 31 alkalisierte Zellulose, eine Lauge und Schwefelkohlenstoff zugeführt, wie dies durch die Pfeile 32 dargestellt ist. Aus der Xanthogenierungseinrichtung 31 gelangt die weiter zu verarbeitende Substanz, die aus einer Flüssigkeit besteht, in welcher in Form von Knollen vorliegende Feststoffpartikel enthalten sind, über eine Zuleitung 33 in eine erste Einrichtung 34 zur ersten mechanischen Zerkleinerung der in der Flüssigkeit enthaltenen Feststoffpartikel. Hier werden die Knollen ein erstes Mal zerkleinert, wie später noch genauer beschrieben wird. Aus dieser Einrichtung gelangt die Substanz über eine Ableitung 35 in einen Tank 36. Dieser Tank 36 ist mit einer Einrichtung 37 zum Kühlen der Substanz ausgestattet, sowie mit einem Rührwerk 38.

In diesem Tank 36 verbleibt die Substanz eine Weile, während dem diese durch das Rührwerk 38 umgerührt wird, so dass die Feststoffpartikel in der Flüssigkeit in der Schwebe gehalten werden und die Substanz gekühlt wird. Während dieser Verweilzeit und durch das Umrühren wird der Lösevorgang der Feststoffpartikel in der Flüssigkeit unterstützt.

Aus diesem Tank 36 wird die Substanz über eine erste Leitung 39 durch eine Pumpe 40 kontinuierlich abgepumpt. Danach gelangt die Substanz durch eine zweite Einrichtung 41 zur mechanischen Zerkleinerung der in der Flüssigkeit enthaltenen Feststoffpartikel. Durch eine zweite Leitung 42 wird die Substanz weiter in einen Behälter 43 geführt, der mit einem weiteren Rührwerk 44 ausgestattet ist. In die zweite Leitung 42 integriert ist eine Einrichtung 45 zum Kühlen der Substanz, die in bekannter Weise als Wärmetauscher ausgebildet ist.

Im Behälter 43 verweilt die Substanz wieder eine gewisse Zeit, während der sie umgerührt wird, so dass die Feststoffpartikel in der Flüssigkeit in Schwebe gehalten werden, wodurch wiederum der chemische Lösungsprozess unterstützt wird.

Ueber eine dritte Leitung 46 wird die Substanz durch eine zweite Pumpe 47 abgepumpt und einer dritten Einrichtung 48 zur weiteren mechanischen Zerkleinerung der in der Flüssigkeit enthaltenen Feststoffpartikel zugeführt. Nach dieser dritten mechanischen Zerkleinerung gelangt die nunmehr als praktisch homogene Lösung vorliegende Substanz durch eine weitere Ableitung 49 und kann der weiteren Verarbeitung zugeführt werden.

Bei der chargenweisen Zuladung des Tanks 36 aus der Xanthogenierungseinrichtung 31 kann in vorteilhafter Weise eine zweite derartige Vorrichtung vorgesehen sein, deren Ladung ebenfalls über die Zuleitung 33 in den Tank 36 gelangen kann, wie durch den strichpunktierten Pfeil 50 dargestellt ist.

Zwischen der zweiten Leitung 42 und der Ableitung 35 ist eine Verbindungsleitung 51 eingesetzt, die strichpunktiert dargestellt ist, die mit einem nicht dargestellten Ventil geöffnet und geschlossen werden kann, so dass erforderlichenfalls ein Teil der Substanz aus der zweiten Leitung 42 nochmals in den Tank 36 zurückgeführt werden kann.

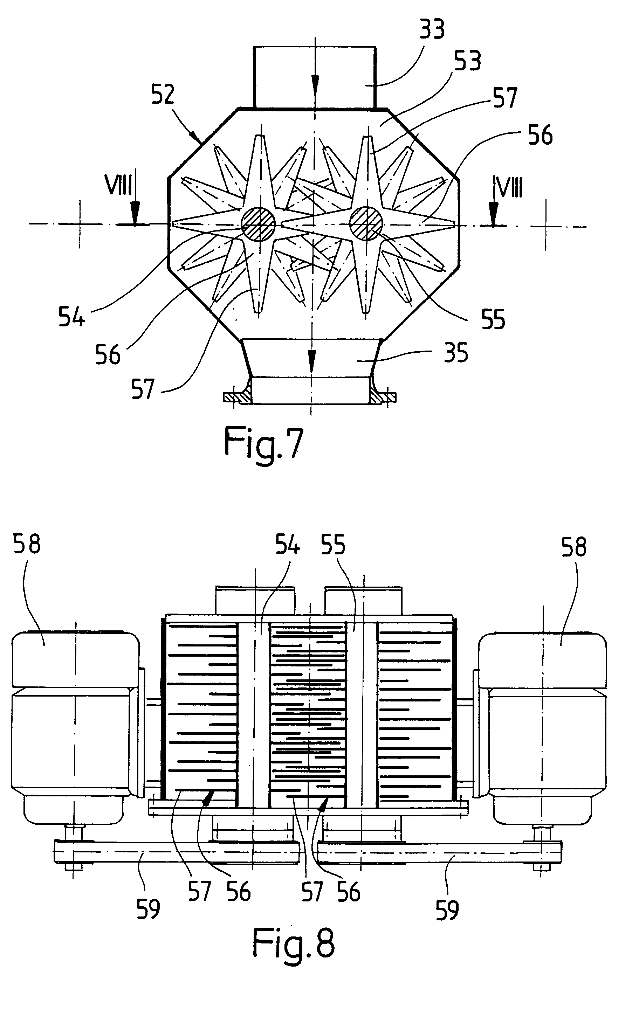

Wie aus Fig. 7 ersichtlich ist, besteht die erste Einrichtung zur mechanischen Zerkleinerung der in der Flüssigkeit enthaltenen Feststoffpartikel aus einem Gehäuse 52, das die entsprechende Zuleitung 33 und Ableitung 35 aufweist. Die Substanz durchfliesst einen Raum 53, der durch das Gehäuse 52 gebildet wird. In diesem Raum sind zwei Wellen 54 und 55 angeordnet, die parallel zueinander verlaufen und die rotierend antreibbar sind. Auf jeder Welle 54 und 55 sind hintereinander angeordnete und voneinander beabstandete Messer 56 befestigt, die eine Sternform bilden, welche im vorliegenden Fall aus vier Flügeln 57 besteht. Die Messer 56 auf jeder Welle 54 und 55 sind jeweils zueinander um 30 Grad versetzt angeordnet, so dass die Flügel 57 entlang der Wellen 54 bzw. 55 eine Schraubenlinie bilden.

Wie in Fig. 8 dargestellt ist, kommt jeweils ein Messer 56 der einen Welle 54 bzw. 55 in den von zwei Messern 56 der anderen Welle 55 bzw. 54 gebildeten Zwischenraum zu liegen. Dies bedeutet, dass sich die Messer 56 im von der Substanz durchströmten Raum 53 überschneiden. Die beiden Wellen 54 und 55 mit den darauf befestigten Messern werden über Antriebsmotoren 58 und Antriebsriemen 59 in Rotation versetzt, wobei die Drehrichtung gegenläufig ist und die Drehgeschwindigkeit unterschiedlich sein kann.

Mit dieser Einrichtung können auch grosse Knollen, die sich in der Flüssigkeit befinden, mechanisch zerkleinert werden, bevor sie in den Tank 36 gelangen.

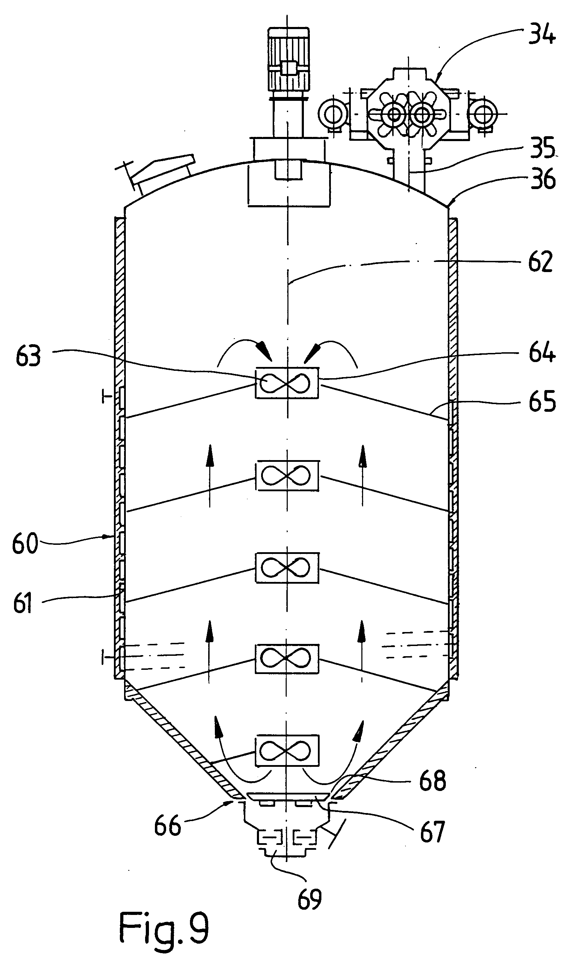

Der Tank 36, wie er in der Fig. 9 dargestellt ist, weist eine isolierende Ummantelung 60 auf, die mit Kühlkanälen 61 ausgestattet ist, in welchem ein Kühlmittel zirkulieren kann. Ueber die Ableitung 35 gelangt die Substanz, nachdem sie die erste Einrichtung 34 durchlaufen hat, in den Tank 36. Zentral im Tank 36 angeordnet ist eine Vertikalwelle 62, auf welcher Schaufelräder 63 befestigt sind, die innerhalb von Stromführungsrohren 64 liegen, welche über Streben 65, die am Tank 36 befestigt sind, gehalten sind. Durch Rotation der Vertikalwelle 62 wird im mittleren Bereich des Tanks 36 eine nach unten gerichtete Axialströmung der Substanz erreicht, die im Bereich des Tankbodens 66 umgelenkt wird und im äusseren Bereich des Tanks nach aufwärts strömt. Diese Umlenkung wird durch ein Scheibenrührwerk 67 unterstützt, das einen Teil des Tankbodens bildet. Zwischen der Scheibe des Scheibenrührwerks 67 und dem Tankboden 66 besteht ein Spalt 68, wobei dessen Breite so gewählt bzw. einstellbar sein kann, dass nur Feststoffpartikel mit einer maximalen Grösse in den unteren Bereich 69 des Tanks 36 gelangen können. In diesem Bereich 69 wird die Substanz durch am Scheibenrührwerk 67 angebrachte Schaufeln umgerührt und in Bewegung gehalten, so dass keine Sedimentation stattfinden kann. Von da kann die Substanz abgepumpt und weitergeleitet werden.

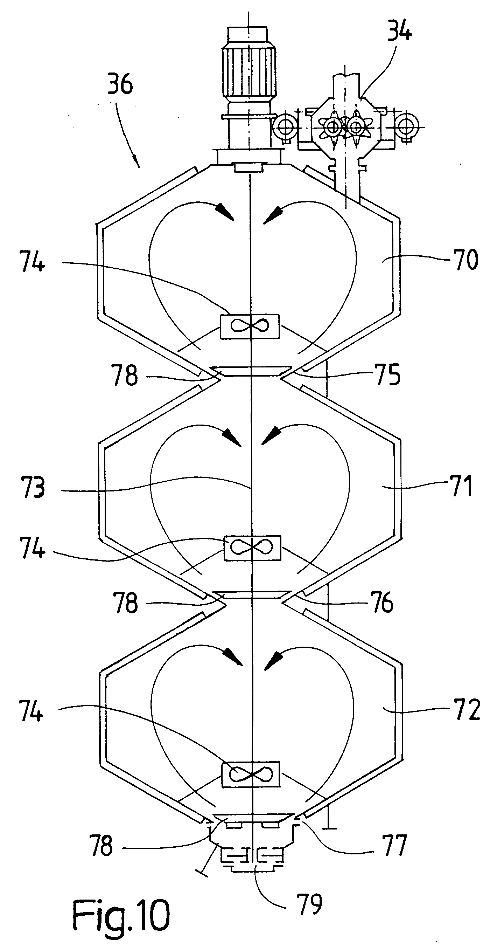

Der Tank 36 kann, wie aus Fig. 10 ersichtlich ist, übereinander liegende Kompartimente 70, 71 und 72 aufweisen. Durch diese Kompartimente 70, 71, 72 verläuft eine rotierend antreibbare durchgehende Welle 73, auf welcher in jedem Kompartiment 70, 71, 72 ein oder mehrere Schaufelräder 74 befestigt ist, das in einem Stromführungsrohr entsprechend dem Stromführungsrohr 64 in Fig. 9 angeordnet ist. In jedem Kompartiment 70, 71 und 72 wird somit im mittleren Bereich eine nach unten gerichtete Axialströmung erreicht, die im unteren Bereich der Kompartimente 70, 71, 72 umgelenkt und im äusseren Bereich aufwärts strömt. Jeder Kompartimentsboden 75, 76 und 77 ist mit einem Scheibenrührwerk 78 ausgestattet, das den selben Aufbau hat, wie das Scheibenrührwerk 67 gemäss Fig. 9. Hierbei ist die Spaltbreite zwischen den Scheibenrührwerken und den entsprechenden Kompartimentsböden so eingestellt, dass er von oben nach unten abnimmt, wodurch die Grösse der der durchzulassenden Feststoffpartikel beim Durchlaufen dieses Tanks 36 von oben nach unten kleiner wird, abhängig von der Spaltbreite. Die Substanz, die in den unteren Bereich 79 dieses Tanks 36 gelangt, wird dann abgepumpt.

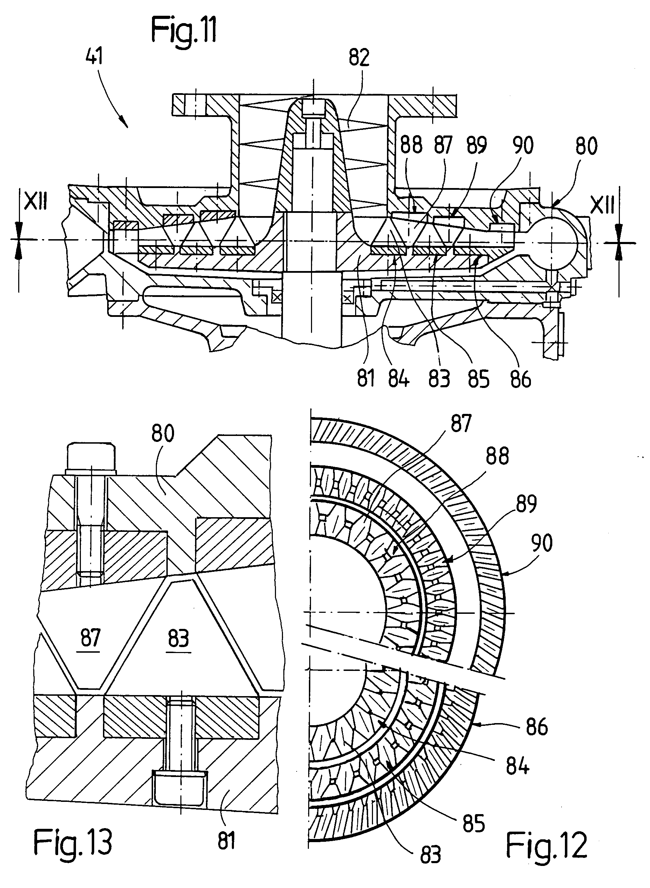

Eine Ausführungsform der zweiten Einrichtung 41 zur mechanischen Zerkleinerung der in der Flüssigkeit enthaltenen Feststoffpartikel ist in den Fig. 11 bis 13 dargestellt. Diese besteht aus einem Spiralgehäuse 80, in welchem ein rotierendes Laufrad 81 angeordnet ist. Das Laufrad 81 ist eingangsseitig mit einer Schnecke 82 ausgestattet, die als Messer ausgebildet ist, wodurch grössere eintretende Feststoffpartikel noch aufgeschnitten werden können. Das Laufrad 81 ist mit Rotorschaufeln 83 ausgestattet, die in mehreren ringförmigen Stufen 84, 85, 86 angeordnet sind und im wesentlichen in einer radialen Ebene liegen. Am Spiralgehäuse 80 sind Statorschaufeln 87 befestigt, die ebenfalls in drei ringförmigen Stufen 88, 89, 90 angeordnet sind, wobei jede Stufe von Statorschaufeln 87 zwischen zwei Stufen von Rotorschaufeln 83 zu liegen kommt. Rotorschaufeln 83 und Statorschaufeln 87 sind im gegeneinandergerichteten Bereich spitz zulaufend, wie insbesondere aus der vergrösserten Darstellung gemäss Fig. 13 ersichtlich ist.

Das Laufrad 81 ist in axialer Richtung über nicht dargestellte Verstellmittel in bekannter Weise verschiebbar. Dadurch lässt sich die Spaltbreite zwischen Rotorschaufeln 83 und Statorschaufeln 87 einstellen, wodurch die Feststoffpartikel in der diese Einrichtung 41 durchlaufende Substanz mehr oder weniger, je nach Spaltbreite, zerkleinert werden.

Die Rotorschaufeln sind bezüglich der radialen Richtung geneigt ausgerichtet, wodurch eine Pumpwirkung erreicht wird, so dass die Feststoffpartikel und die Flüssigkeit zwangsläufig durch diese Einrichtung strömen müssen.

Mit dieser Einrichtung werden die in der Flüssigkeit enthaltenen Feststoffpartikel von einer Grösse bis zu 10 mm aufgebrochen und in Partikel von kleiner als 2 mm aufgeteilt. Eine Zerreibung der Partikel und eine damit einhergehende mechanische Zerstörung der Xanthogenatstruktur wird vermieden.

Die dritte Einrichtung 48 zum weiteren Zerkleinern der Feststoffpartikel in der Flüssigkeit kann in identischer Weise wie die unter Fig. 11 bis 13 dargestellten Einrichtung ausgeführt sein, wobei die Spaltbreite geringer eingestellt wird. Dadurch können die Feststoffpartikel soweit zerkleinert werden, dass sie sich in der nachfolgenden Reifestufe noch vollständig auflösen.

Eine Ausführungsform einer derartigen Anlage weist eine solche Grösse auf, dass die Durchflussmenge der Substanz bei etwa 50 m³/h liegt. Damit können etwa 4 bis 5 Tonnen trockene Fasern pro Stunde produziert werden.

Mit derartigen erfindungsgemässen Anlagen können auch kleine Mengen produziert werden.

Mit diesem erfindungsgemässen Verfahren und der Anlage zur Durchführung dieses Verfahrens wird eine schonende Behandlung der Substanz und insbesondere der Feststoffpartikel während derer Zerkleinerung erreicht, wodurch die Qualität der nachfolgend gewonnenen Viskose gesteigert werden kann und die Produkteausbeute erhöht wird.

Wie bereits erwähnt, ist das Verfahren und die Anlage, wie sie vorgängig im Detail beschrieben wurden, nicht auf dieses Ausführungsbeispiel beschränkt, sondern können für ähnliche Substanzen eingesetzt werden, in welchen knollenförmige Feststoffe in Flüssigkeiten aufgelöst werden sollen, wie dies allgemein in der Chemie, der Farbstoff-, Lebensmittel-, Pharma- und Kosmetikindustrie der Fall sein wird.

## Patentansprüche

1. Verfahren zum Auflösen von krümeligen Feststoffen in Flüssigkeiten, die zu knollenförmigen Feststoffen agglomerieren, zum Erreichen einer im wesentlichen homogenen Lösung, insbesondere zum Auflösen von Feststoffen mit makromolekularen Strukturen in einer Lösemittelflüssigkeit, dadurch gekennzeichnet, dass
die in Form von Knollen vorliegenden Feststoffpartikel, die in der Flüssigkeit enthalten sind und mit dieser eine Substanz bilden, ein erstes Mal zerkleinert werden;
danach die Substanz in einem Tank (36) verweilt, währenddem die Substanz umgerührt, die Feststoffpartikel in der Flüssigkeit in der Schwebe gehalten werden und die Substanz gekühlt wird;
die Substanz kontinuierlich aus dem Tank (36) abgepumpt wird und die in der Flüssigkeit enthaltenen bereits verkleinerten Feststoffpartikel ein zweites Mal zerkleinert werden;
die Substanz in einen Behälter (43) geleitet wird, in welchem diese eine gewisse Zeit verweilt, währendem die Substanz umgerührt wird und die Feststoffpartikel in der Flüssigkeit in der Schwebe gehalten werden;
die Substanz aus dem Behälter (43) abgepumpt wird und die in der Flüssigkeit enthaltenen bereits verkleinerten Feststoffpartikel ein drittes Mal zerkleinert werden;
die so erhaltene praktisch homogene Lösung der weiteren Verarbeitung zugeführt wird.

2. Verfahren nach Anspruch 1, dadurch gekennzeichnet, dass mindestens ein Teil der Substanz, nachdem die in der Flüssigkeit enthaltenen Feststoffpartikel ein zweites Mal zerkleinert worden sind, in den Tank (36) zurückgeführt wird.

3. Verfahren nach Anspruch 1 oder 2, dadurch gekennzeichnet, dass die Substanz, nachdem die in der Flüssigkeit enthaltenen Feststoffpartikel ein zweites Mal zerkleinert worden sind und bevor sie in den Behälter (43) eingebracht wird, gekühlt wird.

4. Anlage zur Durchführung des Verfahrens nach einem der Ansprüche 1 bis 3, dadurch gekennzeichnet, dass:
diese als gasdichtes System ausgebildet ist;
eine mit Zuleitung (33) und Ableitung (35) versehene erste Einrichtung (34) zur ersten mechanischen Zerkleinerung der in der Flüssigkeit enthaltenen Feststoffpartikel angeordnet ist, deren Ableitung (35) in den Tank (36) mündet;
der Tank (36) mit einem Rührwerk (38) und einer Einrichtung (37) zum Kühlen der Substanz ausgestattet ist;
an den Tank (36) eine erste Leitung (39) angeschlossen ist, welche diesen mit einer zweiten Einrichtung (41) zur zweiten mechanischen Zerkleinerung der in der Flüssigkeit enthaltenen Feststoffpartikel verbindet, wobei eine erste Pumpe (40) zwischengeschaltet ist;
von der zweiten Einrichtung (41) zur zweiten mechanischen Zerkleinerung eine zweite Leitung (42) in den Behälter führt (43), welcher mit einem weiteren Rührwerk (44) ausgestattet ist;
an den Behälter (43) eine dritte Leitung (46) angeschlossen ist, die zu einer dritten Einrichtung (48) zur dritten mechanischen Zerkleinerung führt, und in welcher eine zweite Pumpe (47) zwischengeschaltet ist;
die dritte Einrichtung (48) zur dritten mechanischen Zerkleinerung mit einer weiteren Ableitung (49) versehen ist, durch welche die praktisch homogene Lösung ableitbar und der weiteren Verarbeitung zuführbar ist.

5. Anlage nach Anspruch 4, dadurch gekennzeichnet, dass in die zweite Leitung (42) eine mit einem Ventil versehene Verzweigung eingesetzt ist, an die eine Verbindungsleitung (51) angeschlossen ist, die in den Tank (36) führt.

6. Anlage nach Anspruch 4 oder 5, dadurch gekennzeichnet, dass in die zweite Leitung (42) eine Einrichtung (45) zum Kühlen eingesetzt ist, welche als Wärmetauscher ausgebildet ist.

7. Anlage nach einem der Ansprüche 4 bis 6, dadurch gekennzeichnet, dass die erste Einrichtung (34) zur ersten mechanischen Zerkleinerung aus einem Gehäuse (52) besteht, welches zwischen der Zuleitung (33) und der Ableitung (35) einen Raum (53) bildet, durch welchen die Substanz hindurchfliesst, in welchen Raum (53) Flügel (57) von Messern (56) hinein ragen, wobei die Messer (56) mit Abstand voneinander jeweils auf zwei parallel angeordneten, rotierend antreibbaren Wellen (54, 55) angebracht sind, dass die Flügel (57) der Messer (56) auf jeder Welle (54, 55) eine regelmässige Sternform bilden und jedes Messer (56) gegenüber dem benachbarten um einen Drehwinkel versetzt angeordnet ist, und dass die Flügel (57) der Messer (56) der einen Welle (54 bzw. 55) jeweils in den Zwischenraum zweier voneinander beabstandeter Messer (56) der andern Welle (55 bzw. 54) hinein ragen.

8. Anlage nach einem der Ansprüche 4 bis 7, dadurch gekennzeichnet, dass der Tank (36) eine isolierende Ummantelung (60) aufweist und mit Kühlkanälen (61) mit einem darin zirkulierenden Kühlmittel versehen ist, dass das Rührwerk (38) aus mehreren Schaufelrädern (63) besteht, welche auf einer Vertikalwelle (62) mit Abstand voneinander befestigt sind und in Stromführungsrohren (64) liegen, wodurch im mittleren Bereich des Tanks (36) eine nach unten gerichtete Axialströmung erreichbar ist, dass zur Unterstützung der Umlenkung der nach unten gerichteten Axialströmung in eine Aufwärtsströmung im Bereich des Tankbodens (66) ein Scheibenrührwerk (67) vorgesehen ist, wobei zwischen der Scheibe und dem Tankboden (66) ein Spalt (68) besteht.

9. Anlage nach Anspruch 8, dadurch gekennzeichnet, dass der Tank (36) in mehrere übereinander liegende Kompartimente (70, 71, 72) aufgeteilt ist, und in jedem Kompartiment (70, 71, 72) mindestens ein auf der durchgehenden Welle (73) sitzendes Schaufelrad (74) angeordnet ist, und dass die einzelnen Kompartimente (70, 71, 72) jeweils durch ein Scheibenrührwerk (78) voneinander getrennt sind, wobei zwischen der jeweiligen Scheibe und dem entsprechenden Kompartimentsboden (75, 76, 77) ein Abstand besteht.

10. Anlage nach einem der Ansprüche 1 bis 9, dadurch gekennzeichnet, dass die zweite Einrichtung (41) zur mechanischen Zerkleinerung und die dritte Einrichtung (48) zur mechanischen Zerkleinerung jeweils aus einem in einem Spiralgehäuse (80) rotierenden Laufrad (81) bestehen, das mit Rotorschaufeln (83) ausgestattet ist, die in mehreren ringförmigen Stufen (84, 85, 86) auf dem Laufrad (81) angeordnet sind und im wesentlichen in einer radialen Ebene liegen, und die mit Statorschaufeln (87) zusammenwirken, die ebenfalls ringförmig in mehreren Stufen (88, 89, 90) auf dem Spiralgehäuse (80) befestigt sind, wobei jede Stufe (88, 89, 90) von Statorschaufeln (87) zwischen zwei Stufen (84, 85, 86) von Rotorschaufeln (83) zu liegen kommt und die Rotorschaufeln (83) bezüglich der radialen Richtung geneigt ausgerichtet sind.

11. Anlage nach Anspruch 10, dadurch gekennzeichnet, dass auf der Welle des Laufrades (81) im Eintrittsbereich eine Schnecke (82) angeordnet ist, die eintrittseitig als Messer ausgebildet ist.

12. Anlage nach Anspruch 10 oder 11, dadurch gekennzeichnet, dass sowohl die Rotorschaufeln (83) als auch die Statorschaufeln (87) im gegeneinander gerichteten Bereich spitz zulaufend sind, und dass das Laufrad (81) in axialer Richtung mittels Verstellmitteln verschiebbar ist, so dass die Spaltbreite zwischen Rotorschaufeln (83) und Statorschaufeln (87) einstellbar ist.

## Claims

1. Process for dissolving crumbly solids in liquids, which agglomerate into nodular solids, for achieving a substantially homogeneous solution, particularly for dissolving solids having macromolecular structures in a liquid solvent, characterised in that
the solid particles, present in the form of nodules, which are contained in the liquid and form with the latter a substance, are reduced in size a first time;
thereafter the substance stays in a tank (36) while the substance is stirred, the solid particles are held in suspension in the liquid and the substance is cooled;
the substance is pumped out of the tank (36) continuously, and the solid particles contained in the liquid and already reduced in size are reduced in size a second time;
the substance is conveyed into a container (43) in which it stays for a certain time while the substance is stirred and the solid particles are held in suspension in the liquid;
the substance is pumped out of the container (43), and the solid particles contained in the liquid and already reduced in size are reduced in size a third time;
the practically homogeneous solution thus obtained is conveyed to further processing.

2. Process according to claim 1, characterised in that at least part of the substance is returned to the tank (36) after the solid particles contained in the liquid have been reduced in size a second time.

3. Process according to claim 1 or 2, characterised in that the substance is cooled after the solid particles contained in the liquid have been reduced in size a second time and before they are put into the container (43).

4. Installation for carrying out the process according to one of the claims 1 to 3, characterised in that:
this installation is designed as a gas-tight system;
a first apparatus (34) provided with supply line (33) and drainpipe (35) is disposed for the first mechanical reduction in size of the solid particles contained in the liquid, its drainpipe (35) opening out into the tank (36);
the tank (36) is provided with a stirring apparatus (38) and an apparatus (37) for cooling the substance;
connected to the tank (36) is a first pipeline (39) which joins this tank to a second apparatus (41) for the second mechanical reduction in size of the solid particles contained in the liquid, a first pump (40) being interposed;
a second pipeline (42) leads from the second apparatus (41) for the second mechanical reduction in size into the container (43) which is provided with a further stirring apparatus (44);
connected to the container (43) is a third pipeline (46) which leads to a third apparatus (48) for the third mechanical reduction in size and in which a second pump (47) is interposed;
the third apparatus (48) for the third mechanical reduction in size is provided with a further drainpipe (49) through which the practically homogeneous solution can be drained off and conveyed to further processing.

5. Installation according to claim 4, characterised in that inserted in the second pipeline (42) is a branching provided with a valve and joined to a connecting line (51) leading into the tank (36).

6. Installation according to claim 4 or 5, characterised in that inserted in the second pipeline (42) is a cooling apparatus (45) taking the form of a heat exchanger.

7. Installation according to one of the claims 4 to 6, characterised in that the first apparatus (34) for the first mechanical reduction in size comprises a housing (52) forming between the supply line (33) and the drainpipe (35) a space through which the substance flows, into which space (53) arms (57) of cutting blades (56) project, the blades (56) being respectively affixed spaced from one another on two parallel, rotatingly drivable shafts (54, 55); that the arms (57) and the blades (56) form a regular star-shape on each shaft (54, 55), and each blade (56) is offset by an angle of rotation in relation to the neighbouring blade; and that the arms (57) of the blades (56) of one shaft (54 or 55) each project into the space between two spaced blades (56) of the other shaft (55 or 54).

8. Installation according to one of the claims 4 to 7, characterised in that the tank (36) has an insulating sheath (60) and is provided with cooling ducts (61) having a coolant circulating therein; that the stirring apparatus (38) comprises a plurality of impellers (63) secured spaced from one another on a vertical shaft (62) and disposed in power-supply tubes (64), whereby a downwards axial flow is achievable in the middle part of the tank (36); that a disc-type agitator (67) is provided for assisting the deflection of the downwards axial flow near the tank bottom (66) into an upwards flow, a gap (68) existing between the disc and the tank bottom (66).

9. Installation according to claim 8, characterised in that the tank (36) is divided into a plurality of superimposed compartments (70, 71, 72), and at least one impeller (74) seated on the continuous shaft (73) is disposed in each compartment (70, 71, 72), and that the individual compartments (70, 71, 72) are each separated from one another by a disc-type impeller (78), a space existing between each disc and the respective compartment bottom (75, 76, 77).

10. Installation according to one of the claims 1 to 9, characterised in that the second apparatus (41) for mechanical reduction in size and the third apparatus (48) for mechanical reduction in size each comprise an impeller (81) rotating in a spiral housing (80) and provided with rotor blades (83) disposed on the impeller (81) in a plurality of annular steps (84, 85, 86), lying in a substantially radial plane, and co-operating with stator blades (87) likewise secured annularly in a plurality of steps (88, 89, 90) on the spiral housing (80), each step (88, 89, 90) of stator blades (87) coming to lie between two steps (84, 85, 86) of rotor blades (83), and the rotor blades (83) being aligned obliquely to the radial direction.

11. Installation according to claim 10, characterised in that an endless screw (82) formed at the intake end as a cutting blade is disposed on the shaft of the impeller (81) in the intake region.

12. Installation according to claim 10 or 11, characterised in that the facing parts of both the rotor blades (83) and the stator blades (87) taper to a point, and that the impeller (81) is axially displaceable by adjustment means so that the gap width between rotor blades (83) and stator blades (87) is adjustable.

## Revendications

1. Procédé de dissolution de matériaux solides grumeleux dans un liquide, qui agglomère les matériaux solides en une forme de bulbe, afin d'obtenir des matériaux solides à structure macromoléculaire dans un liquide dissolvant, caractérisé en ce que
les particules solides, en forme de bulbe, contenues dans le liquide et formant une substance avec celui-ci, sont fractionnées une première fois,
ensuite la substance est stockée dans un réservoir (36), pendant que la substance est brassée, les particules solides sont maintenues en suspension dans le liquide et la substance est refroidie,
la substance est pompée hors du réservoir (36) de manière continue et les particules solides contenues dans le liquide, déjà fractionnées, sont fractionnées une deuxième fois,
la substance est conduite dans un récipient (43) dans lequel elle est stockée durant un certain temps, pendant que la substance est brassée, les particules solides sont maintenues en suspension dans le liquide,
la substance est pompée hors du récipient (43) de manière continue et les particules solides contenues dans le liquide, déjà fractionnées, sont fractionnées une troisième fois,
la solution pratiquement homogène ainsi obtenue est conduite vers un traitement ultérieur.

2. Procédé selon la revendication 1, caractérisé en ce qu'au moins une portion de la substance, après que les particules solides contenues dans le liquide aient été fractionnées une deuxième fois, est reconduite dans le réservoir (36).

3. Procédé selon l'une des revendications 1 ou 2, caractérisé en ce que la substance, après que les particules solides contenues dans le liquide aient été fractionnées une deuxième fois, et avant qu'elle soit introduite dans le récipient (43), est refroidie.

4. Installation pour la conduite du procédé selon l'une des revendications 1 à 3, caractérisée en ce que
elle forme un système étanche aux gaz,
un premier dispositif muni (34) d'une conduite d'amenée (33) et d'une conduite d'évacuation (35) est prévu pour fractionner mécaniquement les particules solides contenues dans le liquide, la conduite d'évacuation (35) débouchant dans le réservoir (36),
le réservoir (36) est muni d'un dispositif de brassage (38) et d'un dispositif (37) de refroidissement de la substance,
une première conduite (39) est raccordée au réservoir (36), laquelle relie celui-ci avec un deuxième dispositif (41) prévu pour fractionner mécaniquement une deuxième fois les particules solides contenues dans le liquide, et sur laquelle une première pompe (40) est connectée,
une deuxième conduite (42) relie le deuxième dispositif (41) prévu pour fractionner mécaniquement une deuxième fois au récipient (43), lequel est muni d'un autre dispositif de brassage (44),
une troisième conduite (46) est raccordée au récipient (43), laquelle relie celui-ci avec un troisième dispositif (48) prévu pour fractionner mécaniquement une troisième fois, et sur laquelle une deuxième pompe (47) est connectée,
le troisième dispositif (48) prévu pour fractionner mécaniquement une troisième fois est muni d'une autre conduite d'évacuation, par laquelle la solution pratiquement homogène peut être conduite vers un traitement ultérieur.

5. Installation selon la revendication 4, caractérisée en ce qu'une dérivation munie d'un clapet est disposée sur la deuxième conduite (42), une conduite de liaison (51) y étant reliée, conduisant dans le réservoir (36).

6. Installation selon l'une des revendications 4 ou 5, caractérisée en ce qu'un dispositif (45) de refroidissement est disposé sur la deuxième conduite (42), lequel consiste en un échangeur thermique.

7. Installation selon l'une des revendications à 4 à 6, caractérisée en ce que le premier dispositif (34) pour fractionner mécaniquement une première fois consiste en un bâti (52), lequel forme une chambre (53) entre la conduite d'amenée (33) et la conduite d'évacuation (35), au travers de laquelle la substance s'écoule, des ailes (57) de couteaux (56) faisant saillie dans la chambre (53), les couteaux étant espacés l'un de l'autre sur deux arbres (54,55) entraînés en rotation, disposés parallèlement, les ailes (57) du couteau (56) sur chaque arbre (54,55) formant une étoile régulière et chaque couteau (56) étant décalé de son voisin d'un certain angle, les ailes (57) du couteau (56) d'un arbre (54, respectivement 55) faisant saillie dans l'espace intermédiaire des deux couteaux espacés (56) de l'autre arbre (55, respectivement 54).

8. Installation selon l'une des revendications 4 à 7, caractérisée en ce que le réservoir (36) comprend une couverture (60) isolante et est muni de canaux de refroidissement (61) avec un moyen de refroidissement y circulant, que le moyen de brassage (38) comprend plusieurs roues à aubes (63) fixées de manière espacée entre elles sur un arbre vertical (62) dans des tubes de conduite de flux (64), par lesquels un flux axial dirigée vers le bas peut être obtenu dans la région centrale du réservoir (36), et qu'un disque de brassage (67) est prévu dans la région du fond du réservoir (66), pour aider au retournement du flux axial dirigé vers le bas, un espace (68) subsistant entre le disque et le fond du réservoir (66).

9. Installation selon la revendication 8, caractérisée en ce que le réservoir (36) est séparé en plusieurs compartiments (70, 71, 72) superposés, au moins une roue à aubes (74) fixée à l'arbre (73) traversant étant disposée dans chaque compartiment (70, 71, 72), chaque compartiment étant séparé de ses voisins par un disque de brassage (78), un espace subsistant entre chaque disque et le fond du compartiment correspondant (75, 76, 77).

10. Installation selon l'une des revendications 1 à 9, caractérisée en ce que le deuxième dispositif (41) pour fractionner mécaniquement et le troisième dispositif (48) pour fractionner mécaniquement comprennent chacun une roue (81) en rotation dans un bâti en forme de spirale (80), munie de pales (83) disposées en plusieurs étages (84, 85, 86) annulaires sur la roue (81) et disposées essentiellement sur un plan radial, et coopérant avec des pales statoriques (87), également fixées sur plusieurs étages (88, 89, 90) annulaires sur le châssis en forme de spirale (80), chaque étage (88, 89, 90) des pales statoriques (87) vient entre chaque étage (84, 85, 86) des pales rotoriques (83), les pales rotoriques (83) étant inclinées relativement à la direction radiale.

11. Installation selon la revendication 10, caractérisée en ce qu'une hélice (82) est disposée sur l'arbre de la roue (81), dans la région d'admission, faisant office de couteau à l'admission.

12. Installation selon l'une des revendications 10 ou 11, caractérisée en ce que les pales rotoriques (83) ainsi que les pales statoriques (87) sont aménagées en pointes dirigées les unes vers les autres, et en ce que la roue (81) peut être déplacée selon la direction axiale au moyen de moyens de réglage, afin que la dimension de l'espace entre les pales rotoriques (83) et les pales statoriques (87) soit réglable.
